## Europäisches Patentamt
## European Patent Office
## Office européen des brevets

(19)

(11) Publication number: **0 014 589**
**B1**

(12) **EUROPEAN PATENT SPECIFICATION**

(45) Date of publication of patent specification: **10.11.82**

(21) Application number: **80300363.1**

(22) Date of filing: **07.02.80**

(51) Int. Cl.³: **C 09 K 3/14, B 01 J 3/06, B 24 D 3/06**

(54) **A method of making diamond particles and metal bond abrasive body produced therewith.**

(30) Priority: **08.02.79 ZA 790549**

(43) Date of publication of application:
**20.08.80 Bulletin 80/17**

(45) Publication of the grant of the patent:
**10.11.82 Bulletin 82/45**

(84) Designated Contracting States:
**AT BE CH DE FR GB IT SE**

(56) References cited:
**GB - A - 1 500 817**
**US - A - 2 947 609**
**US - A - 3 083 080**
**US - A - 3 124 422**
**US - A - 3 334 968**

(73) Proprietor: **DE BEERS INDUSTRIAL DIAMOND DIVISION (PROPRIETARY) LIMITED**
**8th Floor 45 Main Street**
**Johannesburg Transvaal (ZA)**

(72) Inventor: **Davies, Geoffrey John**
**45, Arend Avenue**
**Randpark Extension 5 Transvaal (ZA)**

(74) Representative: **Jones, Alan John et al,**
**CARPMAELS & RANSFORD 43 Bloomsbury Square**
**London, WC1A 2RA (GB)**

The file contains technical information submitted after the application was filed and not included in this specification

Courier Press, Leamington Spa, England.

A method of making diamond particles and metal bond abrasive body produced therewith

This invention relates to diamond particles and to a method of making such particles.

Diamond particles of the MD (Metal Bond) type and of the SD (Saw Diamond) type are used extensively in industry. Both particles are strong, block crystals of cubo-octahedral habit and having well-defined cubic and octahedra smooth faces. Such particles of synthetic origin have only a small metal inclusion content and are yellow in colour. The larger particles, i.e. of size greater than 250 microns are of the SD type and the smaller particles, i.e. the particles of size less than 250 microns, are of the MD type.

MD diamond particles are used in metal bond grinding wheels and other such metal bond abrasive tools, while SD particles are used in saw segments and impregnated drill bits.

Metal bond grinding wheels, saw segments and other metal bond abrasive bodies have as a common characteristic the fact that the bonding matrix is a metal or alloy. Metal bond grinding wheels consist of a hub to which is bonded a peripheral grinding or working portion. The peripheral grinding portion comprises a mass of diamond or like abrasive particles held in a metal or alloy matrix. The concentration of abrasive in the grinding portion is typically in the range 20 to 35 percent by volume. Saw segments also comprise a mass of diamond or like abrasive particles held in a metal or alloy matrix, the concentration of abrasive typically being in the range 3 to 10 percent by volume. Examples of matrices for metal bond abrasive bodies are bronze, cobalt, nickel and iron and alloys containing any one of these metals.

Hereinafter in the description the term "MD diamond particle" will be used to cover both MD and SD particles.

British Patent Specification No. 1,500,817 discloses a method for the preparation of work-hardened diamond from diamond crystals using pressure and temperature conditions located in the region of plastic deformation, no bonding medium being employed. Such work-hardened diamond presents surface striations.

U.S. Patent Specification No. 3,083,080 discloses a process of growing diamond crystals from a carbonaceous material-catalyst combination in the diamond growth region for the particular catalyst, and changing the pressure and temperature conditions to below the equilibrium line on the phase diagram of carbon, and recovering etched diamond. Catalysts disclosed are metals of, and metals containing, metals of Group VIII of the Periodic Table of elements plus chromium, tantalum and manganese.

U.S. Patent Specification No. 2,947,609 discloses a method for the conversion of carbonaceous material to diamond at elevated temperatures and pressures, particularly useful ranges being 1400 to 1800°C and 70,000 to 100,000 atmospheres (71 to 101 kilobars), in the presence of a catalyst for the diamond forming reaction, the catalyst comprising a preformed alloy of at least two metals, one of which is a member selected from the class consisting of Group VIII metals of the Periodic Table, chromium, tantalum, and manganese. The time required for the reaction is extremely short; in general, a time of about 2 to 4 minutes at the conversion pressure and temperature is allowed so as to assure complete conversion. We believe that this method yields friable RD diamond, not MD or SD diamond.

U.S. Patent Specification No. 3,334,968 discloses a method of synthetically making diamond wherein a mixture of particles of graphite and particles of a metal selected from the group consisting of iron, nickel and cobalt together with fine powders of the carbide of a metal selected from the group consisting of titanium, vanadium, molybdenum, tantalum, niobium, tungsten, chromium and manganese is subjected to temperatures and pressures above the thermodynamic pressure-temperature equilibrium line between diamond and graphite, the contact of the graphite with the metal particles being inhibited by the presence of the fine powders of the metal carbide.

The present invention provides a method of making a MD or SD diamond particle having striated surfaces comprising subjecting a carbonaceous material in the presence of a metal or alloy to elevated conditions of temperature and pressure in the diamond stable region and close to the Berman-Simon line and maintaining these conditions for a period exceeding 20 minutes, characterised in that the metal or alloy is selected from:

(i) iron or an alloy containing at least 60 percent by weight iron, 0 to 20 percent by weight nickel and, if the nickel and iron content does not total 100 percent, the balance cobalt;

(ii) an alloy of one or more of iron, nickel, and cobalt, with 0.1 to 10 percent by weight of at least one carbide-forming element selected from tantalum, manganese, chromium, silicon, tungsten, molybdenum, vanadium and titanium and a mixture of two or more of these elements.

It has been found that such striated (or grooved) particles are superior to conventional MD particles because they key better to a metal matrix because of the striated surfaces.

The invention also relates to the use of these particles in a metal bond abrasive body. The invention, according to this aspect, provides a metal bond abrasive body comprising a mass of MD diamond particles having striated surfaces made by the method of the present invention held in a metal matrix. The metal matrix may be a pure metal or an alloy. The concentration of diamond particles in the body will depend on the nature of the body as described above. The diamond content may be made up solely of the striated MD particles or the diamond content may be a mixture of striated MD particles and

**0014589**

standard smooth surfaced MD particles. The metal bond abrasive body will typically be the working portion of a metal bond abrasive wheel or a saw segment or an impregnated drill bit.

The invention will further be described with reference to the accompanying drawings in which:—

Figure 1 is a iron/cobalt/nickel phase diagram;

Figure 2 is a carbon temperature/pressure phase diagram;

Figure 3 is a photograph of a striated MD diamond particle of the invention;

Figure 4 is a photograph of a standard smooth surfaced MD abrasive particle; and

Figure 5 illustrates graphically certain comparative data.

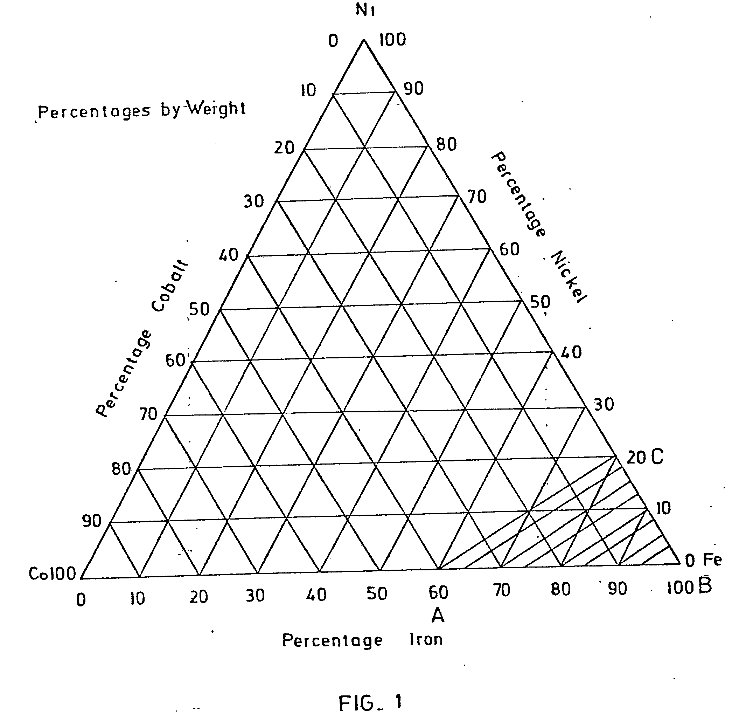

The striated MD diamond particles of the invention are made in the conventional manner, save that a particular metal solvent is used. The particular metal solvent is iron or an alloy of iron with nickel and/or cobalt. The useful alloys are those iron-rich alloys falling within the area A B C of Figure 1 and those falling anywhere in the phase diagram which contain a suitable amount of good carbide-forming element selected from tantalum, manganese, chromium, silicon, tungsten, molybdenum, vanadium and titanium or mixtures of two or more of these elements. The amount of the carbide-former present will depend on its tendency to form carbides and the amount of iron present in the alloy. The amount of carbide former will, however, be in the range 10 to 0,1%, preferably 5 to 0,1%, by weight of the alloy.

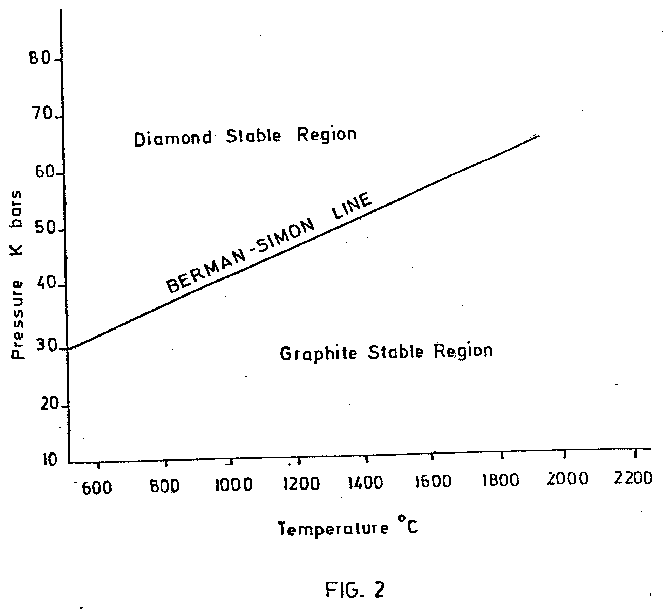

The striated MD diamond particles are made by subjecting a carbonaceous material such as graphite in the presence of the alloy to elevated conditions of temperature and pressure suitable for MD diamond formation. As is known in the art, growth of MD diamond particles takes place in a region close to the Berman-Simon line in the carbon phase diagram illustrated in the attached Figure 2. Typically the graphite and alloy in powder form are placed in the reaction capsule of a conventional high temperature/pressure apparatus and then the mixture in the reaction capsule subjected to the elevated conditions of temperature and pressure. These elevated conditions are typically a temperature of 1500°C and a pressure of 55 kilobars. These elevated conditions are maintained for a period exceeding 20 minutes.

Examples of suitable alloys in the practice of the invention are as follows (all percentages being by weight):

|   | Percent |    | Percent |    | Percent |    |
|---|---------|----|---------|----|---------|----|
| 1. | 70 | Fe | 30 | Co | | |
| 2. | 80 | Fe | 20 | Ni | | |
| 3. | 50 | Fe | 49 | Co | 1 | Va |
| 4. | 49 | Fe | 49 | Co | 2 | Si |
| 5. | 49,75 | Fe | 50 | Co | 0,25 | Ti |
| 6. | 45,5 | Fe | 45,5 | Co | 9 | Cr |

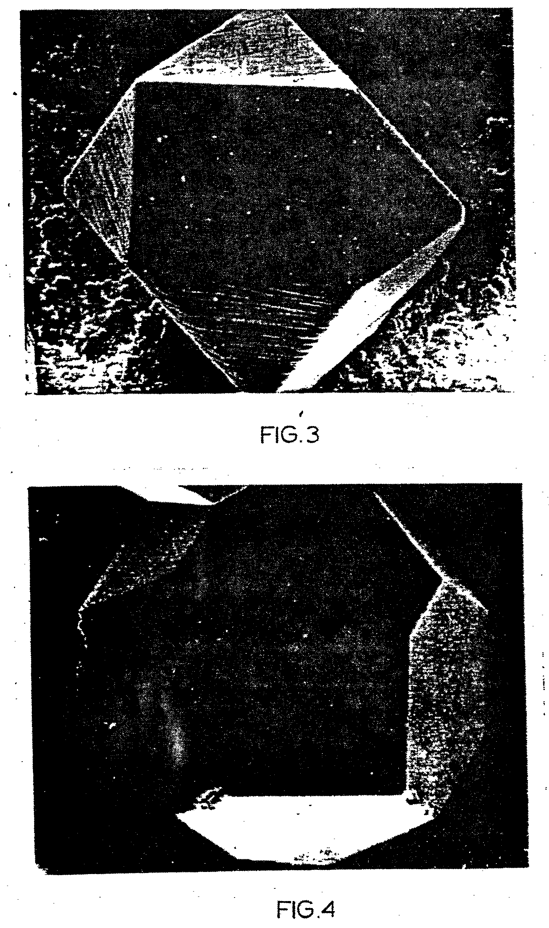

The photograph of the attached Figure 3 illustrates a typical striated MD particle made by the method of the invention while the photograph of Figure 4 illustrates a typical smooth-surfaced MD particle of the prior art.

An example of the invention will now be described. Graphite powder and powdered iron/cobalt alloy, containing 70 percent by weight iron and 30 percent by weight cobalt, were placed in a suitable reaction capsule which was then placed in the reaction zone of a conventional high temperature/pressure apparatus. The temperature and pressure of the contents of the capsule were raised until a temperature of 1500°C and a pressure of 55 kilobars was reached. These elevated conditions were maintained for a period of 40 minutes. The temperature was allowed to drop to ambient and the pressure was released. Recovered from the capsule, using conventional recovery techniques, was a mass of MD diamond particles having striated surfaces. The particles had a size in the range 350 to 420 microns.

The striated MD particles were incorporated in a plurality of saw segments. The concentration of diamond in the saw segments was 7,5 percent by volume and the metal matrix was cobalt. The segments were then brazed to a set of saw blades in the conventional manner. Similar segments were made using standard smooth surfaced MD diamond particles of the same strength, shape, size and metal inclusion of the striated particles. These segments were also brazed to a set of saw blades.

The two sets of saw blades were tested in the cutting of Paarl and Norite Granites under the following conditions:

3

**0 014 589**

|  | Paarl | Norite |
|---|---|---|
| Blade Speed | 1900 r.p.m. (35m/s) | 1900 r.p.m. (35m/s) |
| Depth of Cut | 10 mm | 15 mm |
| Speed of Cut | 2m/min | 2m/min |
| Cutting Rate | 200 Cm²/min | 300 Cm²/min |
| Water Flow Rate | 80 l/min | 80 l/min |
| No. of Cuts/Slot | 6 | 4 |
| No. of Slots/test | 8 | 8 |
| Amount of Granite removed/test | 0.96m² | 0.96m² |

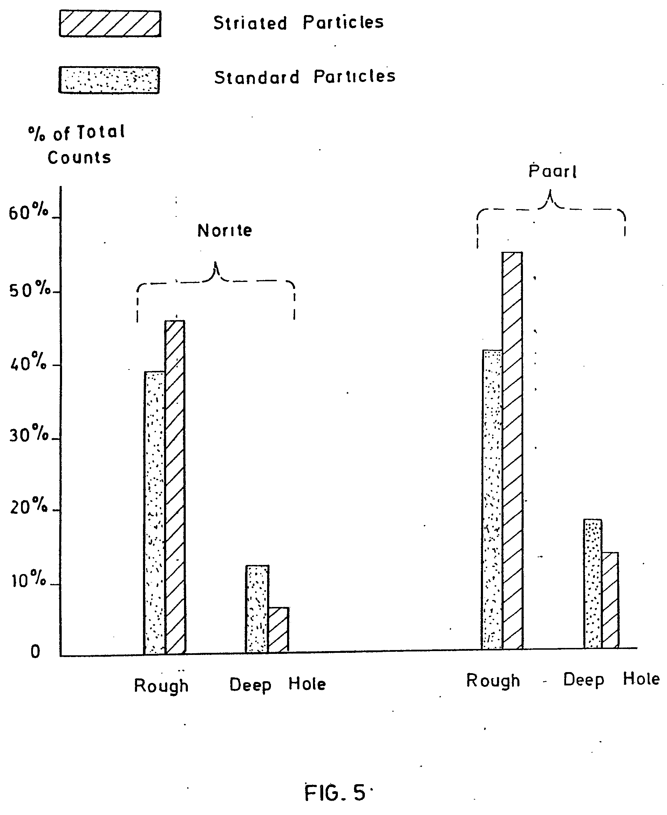

The results of these cutting tests are shown graphically in Figure 5. Figure 5 compares two characteristics called "rough" and "deep hole". The characteristic "rough" is a measure of the amount of particles which exhibited rough surfaces after the test. The roughness resulted from the particle being firmly held in the matrix and wearing during cutting. The characteristic "deep hole" is a measure of the amount of holes produced in the saw segments resulting from pull-out of diamond particles. The higher the "rough" value and the lower the "deep hole" value the firmer the particle was held in the matrix. It can clearly be seen from Figure 5 that the striated particles were held more firmly in the metal matrix than were the standard smooth-surfaced particles.

## Claims

1. A method of making a MD or SD diamond particle having striated surfaces comprising subjecting a carbonaceous material in the presence of a metal or alloy to elevated conditions of temperature and pressure in the diamond stable region and close to the Berman-Simon line and maintaining these conditions for a period exceeding 20 minutes, characterised in that the metal or alloy is selected from:

(i) iron or an alloy containing at least 60 percent by weight iron, 0 to 20 percent by weight nickel and, if the nickel and iron content does not total 100 percent, the balance cobalt;

(ii) an alloy of one or more of iron, nickel, and cobalt, with 0.1 to 10 percent of weight of at least one carbide-forming element selected from tantalum, manganese, chromium, silicon, tungsten, molybdenum, vanadium and titanium and a mixture of two or more of these elements.

2. A method according to Claim 1 wherein the carbide-forming element is present in the alloy in an amount of 0.1 to 5 percent by weight.

3. A method according to Claim 1 or Claim 2 wherein the alloy is selected from the following alloys, all percentages being by weight:

|  | Percent |  | Percent |  | Percent |  |  |  |
|---|---|---|---|---|---|---|---|---|
| 1. | 70 | Fe | 30 | Co |  |  |  |  |
| 2. | 80 | Fe | 20 | Ni |  |  |  |  |
| 3. | 50 | Fe | 49 | Co | 1 | Va |  |  |
| 4. | 49 | Fe | 49 | Co | 2 | Si |  |  |
| 5. | 49.75 | Fe | 50 | Co | 0.25 | Ti |  |  |
| 6. | 45.5 | Fe | 45.5 | Co | 9 | Cr |  |  |

4. A method according to any one of Claims 1 to 3 wherein the carbonaceous material is graphite.

5. A metal bond abrasive body comprising a mass of diamond particles having striated surfaces made in accordance with the method of any one of Claims 1 to 4 held in a metal matrix.

4

**0 014 589**

6. A metal bond abrasive body according to Claim 5 which is a saw segment or impregnated drill bit.

7. A metal bond abrasive body according to Claim 5 which is the working portion of a metal bond grinding wheel.

**Revendications**

1. Procédé pour fabriquer une particule de diamant MD ou SD ayant des surfaces striées comprenant l'étape consistant à soumettre une matière carbonée en présence d'un métal ou alliage à des conditions élevées de température et de pression dans la région stable du diamant et à proximité de la ligne Berman-Simon, et à maintenir ces conditions pendant une période dépassant 20 minutes, caractérisé en ce que le métal ou alliage est choisi parmi:

(i) le fer ou un alliage contenant au moins 60% en poids de fer, 0 à 20% en poids de nickel et, si les teneurs en nickel et en fer ne totalisent pas 100%, le reste de cobalt;

(ii) un alliage d'un ou plusieurs des éléments fer, nickel et cobalt avec 0,1 à 10% en poids d'au moins un élément formateur de carbure choisi parmi le tantale, le manganèse, le chrome, le silicium, le tungstène, le molybdène, le vanadium et le titane et un mélange de deux de ces éléments ou davantage.

2. Procédé suivant la revendication 1, caractérisé en ce que l'élément formant le carbure est présent dans l'alliage dans une proportion de 0,1 à 5% en poids.

3. Procédé suivant la revendication 1 ou 2, caractérisé en ce que l'alliage est choisi parmi les alliages suivants, tous les pourcentages étant en poids:

| | Pour cent | | Pour cent | | Pour cent | | |
|---|---|---|---|---|---|---|---|
| 1. | 70 | Fe | 30 | Co | | | |
| 2. | 80 | Fe | 20 | Ni | | | |
| 3. | 50 | Fe | 49 | Co | 1 | Va | |
| 4. | 49 | Fe | 49 | Co | 2 | Si | |
| 5. | 49,75 | Fe | 50 | Co | 0,25 | Ti | |
| 6. | 45,5 | Fe | 45,5 | Co | 9 | Cr | |

4. Procédé suivant l'une quelconque des revendications 1 à 3, caractérisé en ce que la matière carbonée est du graphite.

5. Corps abrasif à liaison au métal, caractérisé en ce qu'il comprend une masse de particules de diamant ayant des surfaces striées fabriquées conformément au procédé suivant l'une quelconque des revendications 1 à 4 maintenues dans une matrice métallique.

6. Corps abrasif à liaison au métal suivant la revendication 5, que est un segment de scie ou une mèche de foret imprégnée.

7. Corps abrasif à liaison au métal suivant la revendication 5, qui est la partie travaillant d'une meule de rectification à liaison au métal.

**Patentansprüche**

1. Verfahren zur Herstellung eines MD- oder SD-Diamantteilchens mit gefurchter Oberfläche, wobei ein kohlenstoffhältiges Material in Gegenwart eines Metalles oder einer Legierung erhöhten Temperatur- und Druckbedingungen im Stabilitätsbereich von Diamant und nahe der Berman-Simon-Linie unterworfen wird und diese Bedingungen mehr als 20 Minuten lang beibehalten werden, dadurch gekennzeichnet, daß das Metall oder die Legierung ausgewählt ist aus

(i) Eisen oder einer Legierung, die mindestens 60 Gew.-% Eisen, 0 bis 20 Gew.-% Nickel und, wenn der Nickel- und Eisengehalt nicht insgesamt 100 Prozent ergeben, als Rest Kobalt enthält;

(ii) einer Legierung aus einem oder mehreren von Eisen, Nickel und Kobalt, mit 0,1 bis 10 Gew.-% zumindest eines karbidbildenden Elementes aus der Gruppe Tantal, Mangan, Chrom, Silizium, Wolfram, Molybdän, Vanadin und Titan und einer Mischung von zwei oder mehreren dieser Elemente.

2. Verfahren nach Anspruch 1, dadurch gekennzeichnet, daß das karbidbildende Element in der Legierung in einer Menge von 0,1 bis 5 Gew.-% vorhanden ist.

3. Verfahren nach Anspruch 1 oder 2, dadurch gekennzeichnet, daß die Legierung aus den folgenden Legierungen ausgewählt ist, wobei alle Prozentangaben Gew.-% sind:

5

| | % | | % | | % | |
|---|---|---|---|---|---|---|
| 1. | 70 | Fe | 30 | Co | | |
| 2. | 80 | Fe | 20 | Ni | | |
| 3. | 50 | Fe | 49 | Co | 1 | Va |
| 4. | 49 | Fe | 49 | Co | 2 | Si |
| 5. | 49,75 | Fe | 50 | Co | 0,25 | Ti |
| 6. | 45,5 | Fe | 45,5 | Co | 9 | Cr |

4. Verfahren nach einem der Ansprüche 1 bis 3, dadurch gekennzeichnet, daß das kohlenstoffhältige Material Graphit ist.

5. Metallgebundener Schleifkörper mit einer Masse von Diamantteilchen mit gefurchten Oberflächen, hergestellt nach dem Verfahren gemäß einem der Ansprüche 1 bis 4 und in einer Metallmatrix gehalten.

6. Metallgebundener Schleifkörper nach Anspruch 5, dadurch gekennzeichnet, daß er ein Sägesegment oder eine imprägnierte Bohrkrone ist.

7. Metallgebundener Schleifkörper nach Anspruch 5, dadurch gekennzeichnet, daß er der Arbeitsteil einer metallgebundenen Schleifscheibe ist.

**0 014 589**

FIG. 1

FIG. 2

FIG.3

FIG.4

FIG. 5·